# EUROPÄISCHE PATENTANMELDUNG

(11) **EP 1 191 780 A2**
(43) Veröffentlichungstag der Anmeldung: **27.03.2002**
(21) Anmeldenummer: 01120347.8
(22) Anmeldetag: 24.08.2001
(51) Int. Cl.: H04N 1/21

(54) **Vorrichtung und Verfahren zum Erzeugen von Bildern**

(30) Priorität: 20.09.2000 DE 10046666
(71) Anmelder: Agfa-Gevaert AG, 51373 Leverkusen (DE)
(72) Erfinder: Hagen, Thomas, 81827 München (DE)

(57) **Zusammenfassung**

Es wird eine Vorrichtung (10) und ein Verfahren zum Erzeugen von Bildern vorgeschlagen. Dabei werden von einem Empfangsmittel (1) Bilddaten empfangen, die Bildinformationen mehrerer Bilder (B1 bis B4; B5 bis B9) eines gemeinsamen Bilderzeugungsauftrags enthalten. Über ein Ausgabemittel (9) können Bildinformationen, die diesem Ausgabemittel (9) übermittelt werden, auf Aufzeichnungsmaterial ausgegeben werden. Erfindungsgemäß wird mittels eines Steuermittels (7) eine Reihenfolge zum Übermitteln der jeweiligen Bilddaten der Bilder (B1 bis B4; B5 bis B9) des gemeinsamen Auftrags an das Ausgabemittel 9 in Abhängigkeit von wenigstens einem vorgegebenen Kriterium festgelegt.

## Beschreibung

Die vorliegende Erfindung betrifft eine Vorrichtung und ein Verfahren zum Erzeugen von Bildern gemäß der Oberbegriffe der Ansprüche 1 bzw. 5.

Solche Vorrichtungen und Verfahren werden u. a. in Großlaborbetrieben eingesetzt, in denen fotografische Bilder hergestellt und erzeugt werden. Als Eingabemedien, die Bildinformationen von Bildern enthalten, dienen insbesondere fotografische Filme, die eine Vielzahl von Bildnegativen enthalten. In Großlaborbetrieben werden üblicherweise Durchlaufmaschinen zum Erzeugen und Herstellen von Bildern eingesetzt, die sowohl den fotografischen Film als auch das Fotopapier, auf das die Bildinformationen aufbelichtet werden, bandförmig verarbeiten. Beispielsweise die Belichtung der in einem Filmnegativ enthaltenen Bildinformationen auf Aufzeichnungsmaterial, wie Fotopapier, erfolgt in fotografischen Printern, wie beispielsweise dem Agfa MSP und dem Agfa MSP DIMAX. Beide Printer sind Durchlaufmaschinen. Damit einzelne Filme in solchen Durchlaufmaschinen verarbeitet werden können, muß ein Filmband hergestellt werden, in dem eine Vielzahl von Filmen zu einem Filmband vereinigt werden. Dieses Filmband wird zu einer Filmrolle aufgerollt. Eine solche Filmrolle bleibt während des gesamten Verfahrens zum Erzeugen von fotografischen Bildern zusammen und wird erst in der Endverarbeitung wieder in die einzelnen Aufträge, d. h. in die einzelnen Filme zerlegt. Bei der Endverarbeitung ist es sehr wichtig, daß alle Komponenten, die einem einzigen Auftrag zuzuordnen sind, richtig zusammengeordnet werden. Solche Komponenten eines einzelnen Auftrages sind beispielsweise die Auftragstasche, der Film, die hergestellten Bildabzüge und ein Indexprint.

Um solche Filmrollen zusammenzustellen, wird in den Großlaborbetrieben üblicherweise eine Vorsortierung der eingehenden Filme durchgeführt. Kriterien für diese Vorsortierung sind beispielsweise auftragsspezifische Wahlmöglichkeiten des Kunden, der zwischen verschiedenen Alternativen zum Herstellen und Erzeugen der Bilder wählen kann. Die reproduzierten Bilder können beispielsweise in unterschiedlichen Formaten hergestellt werden. Des weiteren stehen unterschiedliche Varianten von Fotopapieren zur Verfügung, die insbesondere auch eine unterschiedliche Oberfläche (matt oder glänzend) haben können. In Abhängigkeit von der Wahl des Kunden zwischen diesen Möglichkeiten wird die Vorsortierung der den verschiedenen Aufträgen zugehörenden Filme durchgeführt. Dadurch kann ein häufiges Ändern der Konfiguration eines Printers vermieden werden. Eine solche Umkonfigurierung des Printers erzeugt nämlich beispielsweise Stillstandszeiten. Die Reihenfolge der Bilder innerhalb eines Auftrages und die Reihenfolge der Aufträge ist durch die Durchlaufrichtung von fotografischem Film und Fotopapier eindeutig vorgegeben. Ein Verändern dieser Reihenfolge ist nur mit erheblichem Aufwand, z. B. durch mehrfaches Hin- und Herspulen der Filmrollen, und dem damit verbundenen Leistungsverlust beim Erstellen von Bildern möglich.

Vor einiger Zeit sind neue Strukturen für solche Großlaborbetriebe bekannt geworden. Eine solche Struktur wird beispielsweise in der europäischen Patentanmeldung EP 0 893 907 A1 beschrieben. Gemäß dieser Patentanmeldung können mehrere Empfangsmittel zum Empfangen von Bilddaten, die Bildinformationen mehrerer Bilder enthalten, über einen sogenannten Bus mit mehreren Ausgabemitteln zum Ausgeben von Bildinformationen auf Aufzeichnungsmaterial verbunden werden. Die von den Empfangsmittel empfangenen Bilddaten können aufgrund von auftragsspezifischen Begleitdaten, die zusammen mit den Bilddaten dem bekannten System zum Herstellen von Bildern zugeführt werden, über den Bus an eines der Ausgabemittel weitergeleitet werden. Dazu ist an den Bus eine Steuereinrichtung angeschlossen, die den Datenfluß von den Empfangsmitteln zu den Ausgabemitteln auftragsorientiert nach Maßgabe der Begleitdaten steuert. Auch bei diesem bekannten System ist ausschließlich ein auftragsweises Weiterleiten der Bilddaten an ein Ausgabemittel vorgesehen.

Der vorliegenden Erfindung liegt die Aufgabe zugrunde, eine Vorrichtung und ein Verfahren zum Erzeugen von Bildern anzugeben, so daß auf technisch einfache Weise die Flexibilität beim Erzeugen von Bildern erhöht werden kann.

Diese Aufgabe wird gemäß der technischen Lehre des Anspruchs 1 oder des Anspruchs 5 gelöst.

Gemäß der vorliegenden Erfindung ist es möglich, zur Übermittlung der Bilddaten von Bildern eines Bilderzeugungsauftrags an das Ausgabemittel ein Festlegen oder ein Sortieren der Reihenfolge der Bilder innerhalb des gemeinsamen Auftrags in Abhängigkeit von einem vorgegebenen Kriterium durchzuführen. Das Festlegen oder Sortieren der Reihenfolge der Bilder erfolgt hier vorteilhafterweise vor der Übermittlung der jeweiligen Bilddaten der Bilder an das Ausgabemittel. Dadurch kann der Aufwand beim Sortieren der einzelnen Bilder des Auftrages bei der Endverarbeitung gering gehalten werden. Dem Kunden kann des weiteren vorteilhafterweise ein Bilderzeugungsauftrag mit erzeugten Bildern geliefert werden, der bezüglich seiner Handhabbarkeit für den Kunden gegenüber bisher gelieferten Aufträgen verbessert ist.

Vorteilhafte Ausgestaltungen der Erfindung können den abhängigen Ansprüchen entnommen werden. Im folgenden werden die Erfindung und ihre Vorteile anhand von Ausführungsbeispielen und Zeichnungen beschrieben.

Es zeigen:
- Fig. 1: ein erstes Ausführungsbeispiel eines erfindungsgemäßen Systems zum Erzeugen von Bildern,
- Fig. 2: ein zweites Ausführungsbeispiel eines erfindungsgemäßen Systems zum Erzeugen von Bildern,
- Fig. 3: ein Ausführungsbeispiel des Systems gemäß der Figur 1, mit dem eine Zugriffsreihenfolge auf abgespeicherte Bilddaten festgelegt werden kann, und
- Fig. 4A, 4B: ein Ausführungsbeispiel des System gemäß der Figur 2, mit dem ein aufeinanderfolgendes Zwischenspeichern der Bilddaten gemäß einer zuvor festgelegten Reihenfolge in einem Speicher erfolgt.

Im folgenden werden für gleiche oder gleichwirkende Elemente durchweg gleiche Bezugszeichen verwendet.

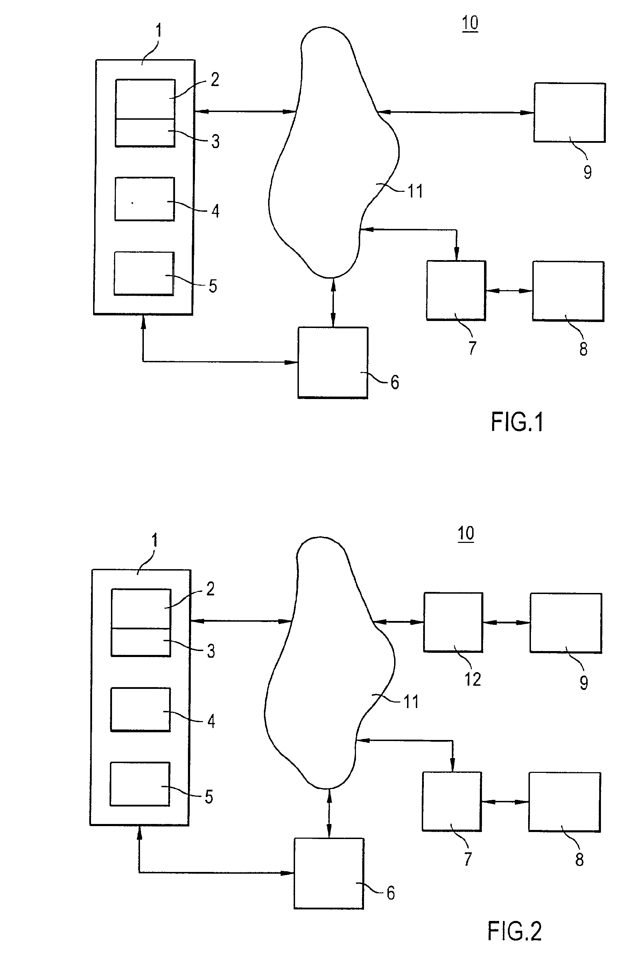

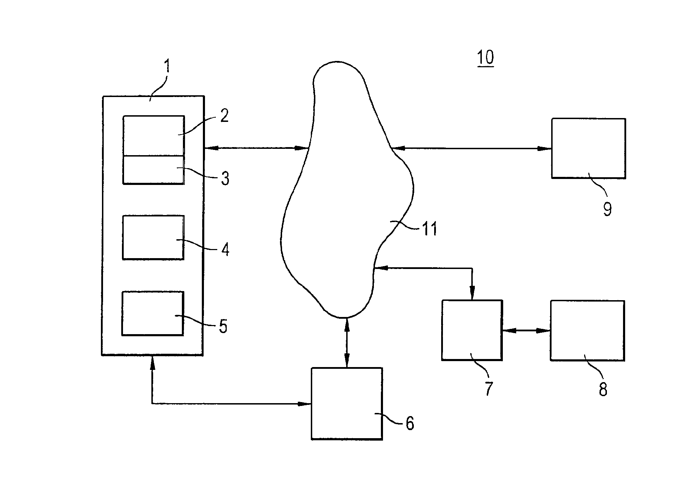

Figur 1 zeigt ein Ausführungsbeispiel eines erfindungsgemäßen Systems 10 zum Erzeugen von Bildern. Das System 10 ist hier ein sogenanntes Fotofinishing-Labor, in dem fotografische Bilderzeugungsaufträge bearbeitet werden. Aufgrund des Systems 10 ist es möglich, Bilddaten, die Bildinformationen mehrerer Bilder eines Bilderzeugungsauftrages enthalten, so zu verarbeiten, daß die Bildinformationen auf Aufzeichnungsmaterial, d. h. Fotopapier, aufbelichtet werden können. Als Aufzeichnungsmaterial können allerdings ebenso andere Aufzeichnungsmaterialien sein, wie z. B. Papier, das zur Aufnahme von Tinte geeignet ist. Die Bildinformationen können dem System 10 in unterschiedlicher Art zugeführt werden. Dazu kann das System 10 unterschiedliche Eingabemedien verarbeiten, auf denen die Bildinformationen der Bilder des Bilderzeugungsauftrages dem System 10 zugeliefert werden. Solche Eingabemedien können beispielsweise fotografischer Film, aber auch andere elektronische Speichermedien, wie beispielsweise Speicherkarten oder Chipkarten, sein. Es ist auch möglich, dem System 10 Bilddaten direkt über ein öffentliches Kommunikationsnetzwerk, wie beispielsweise dem Internet, zuzuleiten.

Das System 10 enthält ein Empfangsmittel 1, mit dem Bilddaten von Bildern eines gemeinsamen Bilderzeugungsauftrags empfangen werden können. Das Empfangsmittel 1 enthält einen Filmscanner 2, mit dem fotografischer Film gelesen und die auf diesem fotografischen Film enthaltenen Bildinformationen der einzelnen Bildnegative ermittelt und Bilddaten entsprechend dieser Bildinformationen erzeugt werden können. Dem Filmscanner 2 zugeordnet ist eine Eingabestation 3 zur Eingabe von Zusatzinformationen, die dem von dem Filmscanner 2 gelesenen Filmen zugeordnet sind. Die Zusatzinformationen können beispielsweise auftragsspezifische Informationen sein, die beispielsweise die Art, d. h. insbesondere das Format und die Oberfläche, des Fotopapiers bezeichnen. Es ist aber ebenso möglich, daß die Zusatzinformationen, die an dem Eingabemittel 3 eingegeben werden können, spezielle Vorgaben enthalten, aufgrund derer ein Sortieren der Bilder innerhalb dieses Auftrags durchgeführt werden soll. Solche Zusatzinformationen zum Sortieren der Bilder innerhalb eines bestimmten Bilderzeugungsauftrages können beispielsweise direkt von dem Kunden vorgegeben werden, der den Bilderzeugungsauftrag in Auftrag gegeben hat oder aber auch von einem Fotohändler kommen, bei dem der Kunde den Auftrag plaziert hat und der den Auftrag dann an den Betreiber des Systems 10 weiterleitet.

Zum Lesen von Speicherkarten, auf denen Bilddaten mit Bildinformationen der Bilder enthalten sind, enthält das Empfangsmittel 1 einen Speicherkartenleser 4. Dem Speicherkartenleser 4 kann eine Speicherkarte zugeführt werden, auf der Bilddaten enthalten sind. Diese Bilddaten werden von dem Speicherkartenleser 4 gelesen und erfaßt. Zusätzlich zu den Bilddaten können auf der Speicherkarte ebenfalls noch Zusatzinformationen abgespeichert sein. Diese Zusatzinformationen können Angaben über das Sortieren der Bilder innerhalb des Bilderzeugungsauftrages enthalten. Das Empfangsmittel 1 enthält darüber hinaus eine Schnittstelle 5, über die Bilddaten und Daten mit Zusatzinformationen aus einem Netzwerk empfangen werden können. Die Schnittstelle 5 ist hier so ausgestaltet, daß Bilddaten aus dem Internet empfangen werden können.

Das System 10 enthält des weiteren einen Bilddatenspeicher 6, in dem die von dem Filmscanner 2, dem Speicherkartenleser 4 oder der Schnittstelle 5 empfangenen oder ermittelten Bilddaten abgespeichert werden. Der Bilddatenspeicher 6 ist an ein Netzwerk 11 angeschlossen, so daß die in dem Bilddatenspeicher 6 abgespeicherten Bilddaten über das Netzwerk 11 transportiert werden können. Ein Printer 9 dient zum Ausgeben von Bildinformationen der Bilder des Bilderzeugungsauftrags auf Fotopapier. Der Printer 9 ist ebenfalls mit dem Netzwerk 11 verbunden und kann somit Bilddaten, die von dem Bilddatenspeicher 6 geliefert werden, empfangen. Der Printer 9 ist hier ein digitaler Laserbelichter, dessen Laserstrahlen aufgrund der ihm zugeführten Bilddaten so moduliert werden, daß die zugeordneten Bildinformationen auf dem Fotopapier erzeugt werden. Es können aber auch andere Arten von Printern eingesetzt werden, z. B. Tintenstrahl-Printer, die Tinte auf dafür geeignetes Papier ausgeben.

Das System 10 enthält des weiteren ein Steuermittel 7, das ebenfalls mit dem Netzwerk 11 verbunden ist. Dieses Steuermittel 7 dient insbesondere zum Steuern der Übermittlung von Bilddaten von dem Bilddatenspeicher 6 zu dem Printer 9. Das Steuermittel 7 ist so ausgestaltet, daß es die Reihenfolge der jeweiligen Bilddaten der Bilder des Bilderzeugungsauftrages zur Übermittlung an den Printer 9 festlegt. Dieses Festlegen der Reihenfolge erfolgt durch das Steuermittel 7 aufgrund von wenigstens einem vorgegebenen Kriterium. Solche Kriterien können, wie bereits oben beschrieben, in den durch das Empfangsmittel 1 empfangenen Zusatzinformationen enthalten sein. Es ist aber ebenso möglich, daß solche Kriterien bereits durch des Systems 10 vorgegeben sind. Dazu ist das Steuermittel 7 hier mit einem Speicher 8 verbunden, in dem bestimmte Kriterien für das Festlegen der Übermittlungsreihenfolge der Bilddaten an den Printer 9 abgespeichert sind. Solche Kriterien, die in dem Speicher 8 abgespeichert sind, können beispielsweise händlerspezifisch festgelegt worden sein. Ein bestimmter Händler, der seine Aufträge an das System 10 schickt, um Bilder erzeugen und herstellen zu lassen, kann somit vorgeben, daß die Bilder dieses Auftrages in einer bestimmten Reihenfolge sortiert werden. Über die dem System 10 zugeführten Zusatzinformationen zu den einzelnen Aufträgen kann eine Information über den Händler vorhanden sein, der den Auftrag zu dem System 10 geschickt hat. Wird diese Information von dem Steuermittel erkannt, so ruft es die für diesen Händler in dem Speicher 8 hinterlegten Kriterien ab und sortiert dementsprechend die Bilddaten der Bilder des Auftrages.

Als Kriterien zum Festlegen der Reihenfolge, in der die Bilddaten der Bilder zu dem Printer 9 übermittelt werden, und/oder zum Sortieren der Bilddaten der Bilder eines bestimmten Auftrages können beispielsweise folgende festgelegt werden:
- Unabhängig von der Durchlaufrichtung eines beliebigen fotografischen Films (z. B. Kleinbild- oder APS-Film) durch den Filmscanner 2 soll immer das erste Bild des Auftrages zuerst zum Belichten an den Printer 9 übermittelt werden. Die Bilder mit den nachfolgenden Bildnummern des Films schließen sich entsprechend ihrer Reihenfolge auf dem Film an. Die Bilder des Films können somit - bei Bedarf oder falls gewünscht - elektronisch "umgespult" werden.
- Die Bilder des Films werden in chronologischer Reihenfolge, d. h. in der Reihenfolge ihrer jeweiligen Aufnahme, sortiert. Dies kann insbesondere bei APS-Filmen vorteilhaft sein.
- APS-Bilder können in drei unterschiedlichen Formaten, Classic, High und Panorama, aufgenommen worden sein. Diese Formate sind auf den APS-Filmen vermerkt, so daß sie von dem Empfangsmittel 1 festgestellt werden können. Kriterium kann sein, daß die Bilder des APS-Films nach ihrem Format sortiert werden. Dabei können die Classic-Formate vor den High-Formaten und diese wiederum vor den Panorama-Formaten an den Printer 9 übermittelt werden. Dadurch kann das Verarbeiten und Verpacken nach dem Herstellen der Bilder erleichtert werden. Entsprechendes kann auch für andere Filmformate, wie z. B. Kleinbild, ermöglicht werden.
- Sollen von den einzelnen Bildern eines bestimmten Auftrages mehrere Kopien erzeugt werden, so ist es möglich, zunächst einen vollständigen Satz der Bilddaten der zu erzeugenden Bilder an den Printer 9 zu übermitteln, bevor dieser den nächsten Satz der Bilder dieses Auftrages erzeugt. Enthält beispielsweise ein Auftrag die Bilder X, Y und Z, die jeweils drei mal erzeugt werden sollen, so ist es auf einfache Weise möglich, anstelle einer jeweils dreimaligen Belichtung der einzelnen Bilder direkt hintereinander, d. h. einer Belichtung X, X, X, Y, Y, Y, Z, Z, Z, drei vollständige Sätze mit den drei Bildern nacheinander auf das Fotopapier auszugeben. Der Auftrag wird daher in der Reihenfolge X, Y, Z, X, Y Z, X, Y, Z erzeugt. Der Kunde muß nicht selbständig die einzelnen Bildsätze manuell sortieren, sondern bekommt bereits von seinem Händler einen entsprechend sortierten Auftrag zurück.

Figur 2 zeigt das zweite Ausführungsbeispiel des erfindungsgemäßen Systems 10 zum Erzeugen von Bildern. Das System 10 gemäß der Figur 2 enthält zwischen dem Netzwerk 11 und dem Printer 9 einen zusätzlichen Zwischenspeicher 12. Dieser Zwischenspeicher 12 dient zum Zwischenspeichern von Bilddaten, nachdem diese von dem Steuermittel 7 aus dem Bilddatenspeicher 6 abgerufen wurden. In dem Speicher 12 werden die Bilddaten der Bilder, die mit dem Printer 9 auf Fotopapier aufbelichtet werden sollen, abgespeichert. Der Speicher 12 kann als sogenannter FiFo(First-in-First-out)-Speicher ausgestaltet sein. Die Bilddaten der einzelnen Bilder werden dann in dem Speicher 12 genau in derjenigen Reihenfolge abgespeichert, in der sie von dem Printer 9 auf Fotopapier aufbelichtet werden sollen. Die zuerst in den FiFo-Speicher 12 eingegebenen Bilddaten werden auch wieder zuerst aus dem Speicher 12 ausgegeben und an den Printer 9 weitergeleitet. Das Verteilen der Bilddaten von dem Bilddatenspeicher 6 auf den Printer 9 ist in diesem Fall besonders einfach und zeitunkritisch möglich. Insbesondere müssen Bilddaten von Bildern, die aufgrund einer Zusatzinformation in mehrfacher Anzahl belichtet und erzeugt werden sollen, nur einmal über das Netz 11 in den Speicher 12 übermittelt werden. Die Bilddaten können dann in dem Speicher 12 zur mehrfachen Belichtung vervielfacht werden. Somit kann die über das Netz 11 zu übertragende Datenmenge eingeschränkt werden.

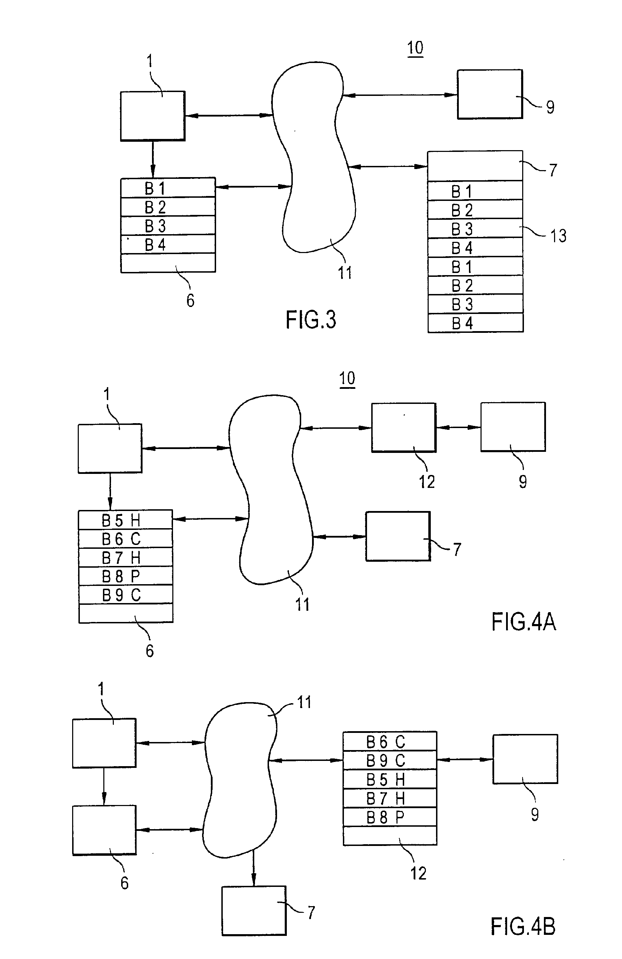

Figur 3 zeigt ein Beispiel, wie in dem anhand der Figur 1 beschriebenen System 10 zum Erzeugen von Bildern eine Zugriffsreihenfolge erstellt werden kann, um Bilddaten von Bildern eines bestimmten Auftrages, die in dem Bilddatenspeicher 6 abgespeichert sind, über das Netz 10 zu dem Printer 9 weiterzuleiten. Das Steuermittel 7 enthält dazu einen Speicher 13, in dem eine Liste abgelegt werden kann, die die Zugriffsreihenfolge auf die in dem Bilddatenspeicher 6 abgelegten Bilddaten festlegt. Im vorliegenden Beispiel gemäß der Figur 3 sind in dem Bilddatenspeicher 6 die Bilddaten von vier Bildern B1, B2, B3 und B4 abgespeichert. Diese vier Bilder B1 bis B4 entstammen einem gemeinsamen Bilderzeugungsauftrag. Durch den Kunden, der diesen Auftrag bei einem Händler abgegeben hat, wurde festgelegt, daß er alle vier Bilder B1 bis B4 in zweifacher Ausführung erzeugt haben möchte. Die Bildinformationen der einzelnen Bilder B1 bis B4 müssen daher durch den Printer 9 jeweils zwei mal auf das Fotopapier aufbelichtet werden. In dem Speicher 13 des Steuermittels 7 wird daher die Zugriffsreihenfolge auf die in dem Bilddatenspeicher 6 abgespeicherten Bilddaten der Bilder B1 bis B4 abgelegt. Diese Zugriffsreihenfolge lautet im vorliegenden Fall: B1, B2, B3, B4, B1, B2, B3, B4.
Dies bedeutet, daß die Bilddaten der Bilder B1 bis B4 jeweils zwei mal aus dem Bilddatenspeicher 6 abgerufen werden, um sie an den Printer 9 weiterzuleiten. Dabei wird zunächst ein vollständiger Bilddatensatz mit den Bilddaten der Bilder B1 bis B4 nacheinander an den Printer 9 weiter übermittelt, bevor erneut aufgrund der in den Speicher 13 abgelegten Zugriffsreihenfolge ein weiterer, zweiter Bilddatensatz mit den Bilddaten der Bilder B1 bis B4 über das Netz 10 an den Printer 9 übermittelt wird. Der Printer 9 belichtet so entsprechend der in dem Speicher 13 hinterlegten Zugriffsreihenfolge nacheinander die Bildinformationen der Bilder B1 bis B4 und anschließend erneut die Bildinformationen der Bilder B1 bis B4 auf Fotopapier.

Die Figuren 4A und 4B zeigen ein Beispiel, wie mittels des anhand der Figur 2 beschriebenen Systems 10 die Reihenfolge zum Übermitteln von Bilddaten von Bildern an den Printer 9 festgelegt werden kann. Wie bereits anhand des zweiten Ausführungsbeispiels gemäß der Figur 2 beschrieben, ist hier zwischen dem Netzwerk 11 und dem Printer 9 der Zwischenspeicher 12 angeordnet. Figur 4A zeigt, daß in dem Bilddatenspeicher 6 Bilddaten von fünf Bildern B5H, B6C, B7H, B8P und B9C abgespeichert sind. Diese Bilder B5 bis B9 entstammen einem gemeinsamen Auftrag, bei dem ein APS-Film dem System 10 zugeführt wurde. Dieser APS-Film wurde von dem Filmscanner 4 (Fig. 1) des Empfangsmittels 1 gelesen und die ermittelten Bilddaten dem Bilddatenspeicher 6 zugeführt. Die Buchstaben H, C und P hinter den Bezeichnungen der einzelnen Bilder B5 bis B9 geben das APS-Format an, in dem die Bilder B5 bis B9 erzeugt werden sollen. H bedeutet dabei High-Format, C bedeutet Classic-Format und P bedeutet Panorama-Format. Durch dem APS-Auftrag beigefügte Zusatzinformationen wird festgelegt, daß die einzelnen Bilder des Auftrages entsprechend ihres APS-Formates sortiert werden sollen. Die Classic-Formate sollen zuerst, anschließend die High-Formate und zuletzt die Panorama-Formate von dem Printer 9 auf Fotopapier aufbelichtet werden. Das Steuermittel 7 legt dazu die Reihenfolge der Übermittlung der jeweiligen Bilddaten der Bilder B5 bis B9 fest, um anschließend ein Weiterleiten der Bilddaten an den Zwischenspeicher 12 durchzuführen. Diese Weiterleitung an den Zwischenspeicher 12 erfolgt daher entsprechend der gewünschten Sortierung innerhalb dieses Auftrages.

Figur 4B zeigt das System 10 und insbesondere den Zwischenspeicher 12, nach dem Übermitteln der Bilddaten von dem Bilddatenspeicher 6 in den Zwischenspeicher 12. Der Zwischenspeicher 12 ist auch hier ein sogenannter FiFo-Speicher. Entsprechend der gewünschten Formatsortierung wurden die Bilddaten der Bilder B5 bis B9 in der folgenden Reihenfolge in den FiFo-Speicher 12 weitergeleitet: B6C, B9C, B5H, B7H, B8P. In dieser Reihenfolge werden die Bilddaten zum Erstellen der einzelnen Bilder an den Printer 9 übermittelt.

## Patentansprüche

1. Vorrichtung (10) zum Erzeugen von Bildern mit
- einem Empfangsmittel (1) zum Empfangen von Bilddaten, die Bildinformationen mehrerer Bilder (B1 bis B4; B5 bis B9) eines gemeinsamen Bilderzeugungsauftrags enthalten, und
- einem Ausgabemittel (9) zum Ausgeben von Bildinformationen mehrerer Bilder auf Aufzeichnungsmaterial entsprechend an das Ausgabemittel (9) übermittelter Bilddaten, die die Bildinformationen enthalten,
**dadurch gekennzeichnet, daß** die Vorrichtung
ein Steuermittel (7) zum Festlegen einer Reihenfolge der Bilder (B1 bis B4; B5 bis B9) des gemeinsamen Auftrags zum Übermitteln der jeweiligen Bilddaten der Bilder (B1 bis B4; B5 bis B9) an das Ausgabemittel (9) in Abhängigkeit von wenigstens einem vorgegebenen Kriterium aufweist, wobei diese festgelegte Reihenfolge der Bilder eine andere ist, als die Reihenfolge der Bilder (B1 bis B4; B5 bis B9), in der die jeweiligen Bilddaten der Bilder (B1 bis B4; B5 bis B9) von dem Empfangsmittel (1) empfangen wurden.

2. Vorrichtung nach Anspruch 1, **dadurch gekennzeichnet, daß** sie einen Speicher (12) zum Speichern von Bilddaten mit den Bildinformationen der Bilder des gemeinsamen Auftrags aufweist und das Steuermittel (7) so ausgestaltet ist, daß es ein aufeinanderfolgendes Speichern der jeweiligen Bilddaten von Bildern (B5 bis B9) des gemeinsamen Auftrags entsprechend der festgelegten Reihenfolge in dem Speicher (12) steuert.

3. Vorrichtung nach Anspruch 1 **dadurch gekennzeichnet, daß** sie einen Speicher (6) zum Speichern von Bilddaten mit den Bildinformationen der Bilder (B1 bis B4) des gemeinsamen Auftrags aufweist und das Steuermittel (7) so ausgestaltet ist, daß es entsprechend der festgelegten Reihenfolge auf in dem Speicher (6) gespeicherte Bilddaten der Bilder (B1 bis B4) zugreift.

4. Vorrichtung nach einem der vorhergehenden Ansprüche, **dadurch gekennzeichnet, daß** ein weiterer Speicher (8) zum Speichern des wenigstens einen vorgegebenen Kriteriums vorhanden ist und dieses wenigstens eine vorgegebene Kriterium in Abhängigkeit von einer dem gemeinsamen Auftrag zugeordneten Begleitinformation abrufbar ist.

5. Verfahren zum Erzeugen von Bildern, bei dem
- Bilddaten, die Bildinformationen mehrerer Bilder (B1 bis B4; B5 bis B9) eines gemeinsamen Bilderzeugungsauftrags enthalten, empfangen werden und
- Bildinformationen mehrerer Bilder (B1 bis B4; B5 bis B9) auf Aufzeichnungsmaterial entsprechend übermittelter Bilddaten, die die Bildinformationen enthalten, ausgegeben werden,
**dadurch gekennzeichnet, daß**
eine Reihenfolge der Bilder (B1 bis B4; B5 bis B9) des gemeinsamen Auftrags zum Übermitteln der jeweiligen Bilddaten der Bilder (B1 bis B4; B5 bis B9) für das Ausgeben der Bildinformationen auf das Aufzeichnungsmaterial in Abhängigkeit von wenigstens einem vorgegebenen Kriterium festgelegt wird, wobei diese festgelegte Reihenfolge der Bilder eine andere ist, als die Reihenfolge der Bilder (B1 bis B4; B5 bis B9), in der die jeweiligen Bilddaten der Bilder (B1 bis B4; B5 bis B9) empfangen wurden.
